# EUROPÄISCHE PATENTSCHRIFT

(11) **EP 0 865 965 B1**
(45) Veröffentlichungstag und Bekanntmachung des Hinweises auf die Patenterteilung: **15.12.1999**
(21) Anmeldenummer: 98103010.9
(22) Anmeldetag: 20.02.1998
(51) Int. Cl.: B60Q 1/04

(54) **Zierrahmen für die Scheinwerfer von Kraftfahrzeugen**
Decorative frame for vehicle headlamps
Enjoliveur pour phares de véhicule

(30) Priorität: 18.03.1997 DE 29704865 U
(43) Veröffentlichungstag der Anmeldung: 23.09.1998
(73) Patentinhaber: Schätz Fahrzeugtechnik GmbH, 80993 München (DE)
(72) Erfinder: Schätz, Bernd, 80993 München (DE)
(74) Vertreter: Brose, D. Karl

(56) Entgegenhaltungen:
- DE-A- 2 847 112
- DE-A- 3 311 598
- DE-A- 3 413 003
- DE-A- 4 235 289
- DE-B- 1 019 622
- DE-B- 1 042 494
- DE-C- 3 306 435
- DE-C- 3 728 752
- FR-A- 2 487 750
- GB-A- 2 069 402

## Beschreibung

Die Erfindung betrifft einen Zierrahmen für die Scheinwerfer oder Rücklichter von Kraftfahrzeugen mit einem, dem Umriß des Scheinwerfers oder Rücklichts angepaßten Profilbauteil, welcher eine oberflächenveredelte Außenseite und eine dem Scheinwerferrand oder Rücklichtrand zugekehrte Innenseite aufweist, nach dem Oberbegriff des Anspruchs 1.

Ein derartiger Zierring, dessen primäre Funktion die Befestigung der Frontschiebe des Scheinwerfers ist, ist z.B. aus DE-B-1 019 622 bekannt.

Zierrahmen, welche allgemein als Scheinwerferzierringe bezeichnet wurden, sind seit vielen Jahren bekannt und wurden insbesondere bei Kraftfahrzeugen in den 50er und 60er Jahren allgemein sowohl an den Frontscheinwerfern als auch an den Rücklichtern verwendet. Moderne Kraftfahrzeuge weisen derartige Scheinwerferzierringe nicht mehr auf, da sich grundsätzlich das Design geändert hat. Es hat sich nun herausgestellt, daß auf dem Markt ein starkes Bedürfnis besteht, derartige Kraftfahrzeugscheinwerferzierringe nachträglich einzubauen, um dem Auto ein persönliches Aussehen zu geben.

Der Erfindung liegt die Aufgabe zugrunde, dies zu ermöglichen, und einen Zierrahmen vorzuschlagen, welcher jederzeit nachgerüstet werden kann.

Diese Aufgabe wird mit den Merkmalen des Anspruchs 1 gelöst.

Hierdurch lassen sich derartige Scheinwerferzierringe jederzeit bei jedem Kraftfahrzeug nachrüsten, indem diese unmittelbar nachträglich auf die Frontscheibe des Scheinwerfers oder Rücklichts aufgeklebt werden können. Aufgrund der besonderen Ausgestaltung nach der Erfindung kann ein derartiges Nachrüsten von jedem Kfz.-Besitzer ohne weiteres selbst vorgenommen werden.

Der den Zierrahmen bildende Profilbauteil kann bevorzugt aus dauerhaft verchrombarem Kunststoff, beispielsweise aus ABS, aus Metall, insbesondere aus Messing, oder aus glanziertem Aluminium bestehen.

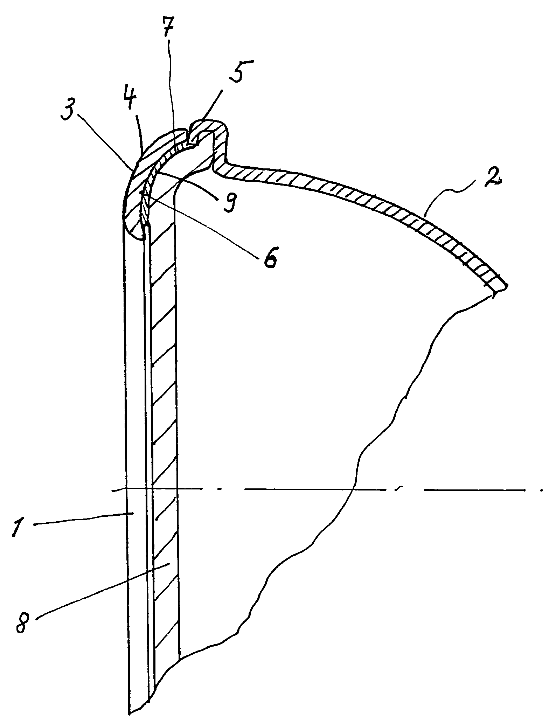

Im folgenden wird die Erfindung anhand einer in der Zeichnung beispielhaft veranschaulichten Ausführungsform näher erläutert. Die Zeichnung zeigt eine stark schematische Schnittansicht eines Teils eines Kraftfahrzeugscheinwerfers mit einem Zierrahmen nach der Erfindung.

Der in der Zeichnung dargestellte Zierrahmen 1 ist an einem Scheinwerfer 2 üblicher Bauart eines Kraftfahrzeuges angebracht, welcher lediglich bruchstückhaft veranschaulicht ist. Der Zierrahmen 1 besteht aus einem Profilbauteil 3, welcher dem Umriß des Scheinwerfers 2 entsprechend geformt ist. Der Profilbauteil 3 weist eine oberflächenveredelte Außenseite 4 auf, die beispielsweise verchromt ist oder in irgendeiner anderen Art veredelt wurde.

Die dem Scheinwerferrand 5 zugekehrte Innenseite 6 des Profilbauteils 3 ist mit einem Klebemittel 7 versehen, mittels dessen der Zierrahmen 1 nachträglich direkt auf die aus Glas oder Kunststoff bestehende Frontscheibe 8 des Scheinwerfers 2 aufgeklebt wurde.

Das Klebemittel ist durch ein Doppelklebeband gebildet, bei dem es sich beispielsweise um den 3M-Kleber 05386 in einer Stärke von 0,8 mm handeln kann.

Der Bauteil 3 kann aus dauerhaft verchrombarem Kunststoff, beispielsweise ABS, bestehen.

Statt dessen kann der Bauteil aus Metall, beispielsweise Messing, bestehen, wobei mindestens die Außenseite 4 verchromt oder hochglanzpoliert ist.

Alternativ hierzu kann der Profilbauteil 3 aus glanziertem Aluminium hergestellt sein.

Es ist offensichtlich, daß der Profilbauteil 3 nicht unbedingt den in der Zeichnung dargestellten Querschnitt aufweisen muß, solange ausreichend große Flächen der Innenseite 6 zur Verfügung stehen, um ein sicheres Aufkleben auf die Frontscheibe 8 zu gewährleisten. So kann beispielsweise der Querschnitt des Profilbauteils 3 noch zusätzliche Leisten oder Rillen aufweisen, je nachdem, welcher ästhetischer Eindruck hervorgerufen werden soll.

Anstelle an einem Scheinwerfer 2 befestigt zu werden, kann der Zierrahmen 1 bei entsprechender Gestaltung und Profil auch für die gleichartige Befestigung an der Frontscheibe einer nicht dargestellten Rückleuchte ausgebildet sein.

## Patentansprüche

1. Zierrahmen (1) für die Scheinwerfer (2) oder Rücklichter von Kraftfahrzeugen mit einem, dem Umriß des Scheinwerfers (2) oder Rücklichtes angepaßten Profilbauteil (3), welcher eine oberflächenveredelte Außenseite (4) und eine dem Scheinwerferrand (5) oder Rücklichtrand zugekehrte Innenseite (6) aufweist, wobei die Innenseite (6) mit einem Klebemittel (7) versehen ist um den der Zierrahmen (1) mit der aus Glas oder Kunststoff bestehenden Frontscheibe (8) des Scheinwerfers (2) oder Rücklichts zu verbinden, **dadurch gekennzeichnet,** daß das Klebemittel (7) ein Doppelklebebend (9) ist, und daß der Zierrahmen (1) auf die Frontscheibe (8) des fest im Kraftfahrzeug eingebauten Scheinwerfers (2) oder Rücklichts aufklebbar ist.

2. Zierrahmen nach Anspruch 1, dadurch gekennzeichnet, daß der Profilbauteil (3) aus dauerhaft verchrombarem Kunststoff besteht.

3. Zierrahmen nach Anspruch 2, dadurch gekennzeichnet, daß der Profilbauteil (3) aus ABS besteht.

4. Zierrahmen nach einem der Ansprüche 1, dadurch gekennzeichnet, daß der Profilbauteil (3) aus Metall besteht, wobei mindestens die Außenseite (4) verchromt ist.

5. Zierrahmen nach Anspruch 4, dadurch gekennzeichnet, daß der Profilbauteil (3) aus Messing besteht.

6. Zierrahmen nach Anspruch 1, dadurch gekennzeichnet, daß der Profilbauteil (3) aus glanziertem Aluminium besteht.

## Claims

1. Ornamental frame (1) for the headlights (2) or the back-lights of automobiles, having a profiled member (3) adapted to the outline of the headlight (2) or the backlight, said member having a surface-finished outer surface (4) and an inner surface (6) facing the rim (5) of the headlight or the backlight, wherein the inner surface (6) is provided with an adhesive (7) to join the ornamental frame (1) with the front screen (8) of the headlight (2) or the backlight consisting of glass or plastics, characterized in that the adhesive (7) is a double-adhesive tape (9) and, in that the ornamental frame (1) can be sticked onto the front screen (8) of the headlight (2) or the backlight being firmly mounted in the automobile.

2. Ornamental frame according to claim 1, characterized in that the profiled member (3) is consisting of a plastics material, which durably can be chrome-plated.

3. Ornamental frame according to claim 2, characterized in that the profiled member (3) is consisting of ABS.

4. Ornamental frame according to claim 1, characterized in that the profiled member (3) is consisting of metal, wherein at least the outer surface (4) is chrome-plated.

5. Ornamental frame according to claim 4, characterized in that the profiled member (3) is consisting of brass.

6. Ornamental frame according to claim 1, characterized in that the profiled member (3) is consisting of glazed aluminum.

## Revendications

1. Armature (1) pour phares (2) ou feux arrières de véhicules automobiles, comprenant un élément de construction profilé (3) adapté au contour du phare (2) ou du feu arrière, et qui présente une face extérieure (4) à surface améliorée par transformation et une face intérieure (6) dirigée vers le bord (5) du phare ou le bord du feu arrière, la face intérieure (6) étant munie d'un moyen adhésif (7) permettant de raccorder l'armature (1) à la plaque frontale (8) du phare (2) ou du feu arrière faite de verre ou de plastique, caractérisée en ce que le moyen adhésif (7) est un ruban à deux faces adhésives (9) et en ce que l'armature (1) peut être collée à la plaque (8) du phare (2) ou du feu arrière encastré à demeure dans le véhicule automobile.

2. Armature selon la revendication 1, caractérisée en ce que l'élément de construction profilé (3) est fabriqué dans un plastique durable qui peut être chromé.

3. Armature selon la revendication 2, caractérisée en ce que l'élément de construction profilé (3) est fabriqué en ABS.

4. Armature selon la revendication 1, caractérisée en ce que l'élément de construction profilé (3) est fait de métal, au moins la face extérieure (4) étant chromée.

5. Armature selon la revendication 4, caractérisée en ce que l'élément de construction profilé (3) est fait de laiton.

6. Armature selon la revendication 1, caractérisée en ce que l'élément de construction profilé (3) est fait d'aluminium poli.
